# FASCICULE DE BREVET EUROPEEN

(11) **EP 4 396 077 B1**
(45) Date de publication et mention de la délivrance du brevet: **28.05.2025**
(21) Numéro de dépôt: 21790227.9
(22) Date de dépôt: 31.08.2021
(51) Int. Cl.: B64C 11/06, F04D 29/32

(54) **SYSTÈME DE COMMANDE DU CALAGE ANGULAIRE D'UNE AUBE D'HELICE POUR UNE TURBOMACHINE D'AERONEF**
SYSTEM ZUR STEUERUNG DER BLATTVERSTELLUNG EINES PROPELLERS FÜR EIN FLUGZEUGTURBINENTRIEBWERK
SYSTEM FOR CONTROLLING THE PITCH SETTING OF A PROPELLER BLADE FOR AN AIRCRAFT TURBINE ENGINE

(43) Date de publication de la demande: 10.07.2024
(73) Titulaire: SAFRAN AIRCRAFT ENGINES, 75015 Paris (FR)
(72) Inventeur: SERVANT, Régis Eugène Henri, 77550 MOISSY-CRAMAYEL (FR); COTTET, Clément, 77550 MOISSY-CRAMAYEL (FR); JABLONSKI, Laurent, 77550 MOISSY-CRAMAYEL (FR); TAILLANT, Jean-Claude Christian, 77550 MOISSY-CRAMAYEL (FR)
(74) Mandataire: Gevers & Orès
(86) Numéro de dépôt international: PCT/FR2021/051500
(87) Numéro de publication internationale: WO 2023/031522

(56) Documents cités:
- WO-A1-2010/116080
- WO-A1-2020/169896
- FR-A1- 2 942 454

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de l'art comprend notamment les documents FR-A1-3 017 163, FR-A1-3 080 322, WO-A1-2020/169896, FR-A1-2 942 454 et WO-A1-2010/116080. En particulier le document WO 2020/169896 A1 divulgue selon son abrégé un pivot d'aube à orientation réglable, comprenant un plot ayant des moyens de retenue et des moyens d'accouplement, une bague interne, un écrou de serrage, une bague de transmission de calage positionnée à l'intérieur de l'extrémité radiale intérieure du plot et munie de moyens d'accouplement coopérant avec les moyens d'accouplement du plot, et des moyens de verrouillage de la bague de transmission de calage sur le plot.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes. Or l'augmentation du BPR va de pair avec la réduction du FPR (*Fan Pressure Ratio*). Par conséquent, un système de changement de pas (aube à calage variable) est généralement requis pour que l'hélice soit opérable sur tout le domaine de vol.

Il existe plusieurs technologies d'attache d'une aube d'hélice à calage variable et plusieurs technologies de commande du calage angulaire d'une aube d'hélice de ce type. Cependant, ces technologies sont relativement complexes et coûteuses. Par ailleurs, en cas de problème et en particulier de casse, elles ne garantissent pas la rétention des aubes radialement vers l'extérieur par rapport à l'axe de rotation de l'hélice, en particulier lorsque cette hélice n'est pas carénée.

En cas de rupture des moyens de rétention d'une aube de l'hélice, il est en effet particulièrement important d'assurer la retenue de cette aube afin d'éviter qu'elle soit projetée vers l'extérieur et qu'elle impacte le fuselage de l'aéronef équipé de la turbomachine. Cette fonction de sécurité, appelée « *failsafe* », n'est pas toujours présente dans les systèmes de commande des technologies actuelles. Les systèmes de commande qui comprennent cette fonction comprennent en général des éléments qui sont eux-mêmes susceptibles de se détacher et d'impacter le fuselage de l'aéronef. Plus la taille et la densité de ces éléments sont importantes, et plus les risques de dégâts sur le fuselage sont importants et peuvent nécessiter un blindage spécifique, ce qui est impacte la masse de l'aéronef et donc ses performances.

Il existe donc un besoin d'une technologie de système de commande qui intègre une fonction de sécurité simple et efficace.

### Résumé de l'invention

L'invention concerne un système de commande du calage angulaire d'une aube d'hélice, pour une turbomachine d'aéronef, qui comprend :
- une aube comportant une pale reliée à un pied, l'aube comportant un axe de calage et son pied comportant un bulbe qui présente deux portées, respectivement inférieure et supérieure, qui s'étendent autour dudit axe,
- un bol comportant une paroi annulaire s'étendant autour dudit axe, cette paroi annulaire comportant une extrémité axiale inférieure fermée par une paroi de fond, et une extrémité axiale supérieure ouverte et configurée pour autoriser le montage du pied de l'aube à l'intérieur du bol, la paroi de fond comprenant un évidement ayant une section transversale non circulaire et configuré pour recevoir une extrémité libre de forme complémentaire dudit pied de façon à ce que le bol soit solidarisé en rotation avec le pied autour dudit axe,
- une bague qui s'étend autour dudit axe et qui est montée autour du pied et dans le bol, cette bague comportant une paroi inférieure qui est située dans le bol et qui comprend une ouverture traversée par ladite extrémité libre du pied, ladite portée inférieure du bulbe du pied étant configurée pour prendre appui au moins en direction axiale sur cette paroi inférieure, du côté opposé à la pale de l'aube, la bague comportant en outre une paroi intermédiaire ajourée et un filetage à une extrémité supérieure,
- des butées qui sont disposées autour dudit axe et qui sont montées autour du pied et dans le bol, ces butées étant engagées dans des lumières de ladite paroi intermédiaire et dans au moins un logement de la paroi annulaire du bol, ladite portée supérieure du bulbe du pied étant configurée pour prendre appui au moins en direction axiale sur ces butées, du côté de la pale de l'aube, et
- un écrou vissé sur le filetage de la bague et configuré pour prendre appui axialement sur ledit bol de façon à ce que le serrage de l'écrou force l'appui de la paroi inférieure de la bague sur la portée inférieure du bulbe du pied, l'appui de la portée supérieure de ce bulbe sur les butées, et l'appui de ces butées sur des surfaces d'appui complémentaires dudit au moins un logement du bol.

Dans le système de calage selon l'invention, c'est le bol dans lequel est monté le pied de l'aube, qui est configuré pour être déplacé en rotation autour de l'axe de calage et qui entraîne l'aube dans ce déplacement. Pour cela, le pied de l'aube est solidarisé en rotation avec le bol, qui forme ainsi une liaison pivot pour l'aube.

Le système de calage comprend une bague, des butées et un écrou et cet ensemble permet d'assurer plusieurs fonctions. Il permet le montage et le démontage du pied de l'aube dans le bol sans avoir à démonter le bol. Ce montage et ce démontage peuvent être réalisés depuis l'extérieur, ce qui, dans le cas d'une hélice non carénée, peut permettre de démonter et retirer l'aube sans besoin de dépose de la turbomachine, qui peut rester par exemple attachée à une voilure de l'aéronef. Les butées assurent une fonction de sécurité *failsafe.* Dans le cas par exemple où l'une de ces butées serait fendue ou rompue, les autres butées assureraient la retenue du pied d'aube jusqu'à remplacement de la butée endommagée. Par ailleurs, le serrage de l'écrou permet d'appliquer une précharge radiale sur le pied de l'aube, ce qui permet de garantir l'immobilisation et la retenue de l'aube. Cette précharge est avantageusement prédéterminée de façon à ne pas être totalement compensée par les efforts induits par les efforts centrifuges, les efforts aérodynamiques et les moments appliqués sur l'aube, lors du fonctionnement et de la rotation de l'hélice.

Le système selon l'invention peut comprendre une ou plusieurs des caractéristiques suivantes, prises isolément les unes des autres, ou en combinaison les unes avec les autres :
- le nombre de butées est inférieur ou égal au nombre de lumières de la paroi intermédiaire de la bague, chacune des butées étant engagée dans une de ces lumières ;
- le nombre de butées est compris entre 5 et 20, et de préférence entre 7 et 11 ;
- la paroi inférieure de la bague a une forme générale tronconique évasée du côté de la pale de sorte que l'appui de la portée inférieure du bulbe du pied sur cette paroi inférieure ait en tout point une composante axiale et une composante radiale par rapport audit axe ;

- chacune des butées comprend une face d'appui sur la portée supérieure du bulbe du pied, cette face d'appui étant conformée de sorte que l'appui ait en tout point une composante axiale et une composante radiale par rapport audit axe ;
- l'écrou est vissé à l'extérieur de la bague et/ou prend appui axialement sur une extrémité libre supérieure du bol ;
- chacune des butées comprend au moins un doigt en saillie radialement vers l'extérieur par rapport audit axe, ledit au moins un doigt comportant une face supérieure d'appui axial sur une surface d'appui correspondante dudit au moins un logement ;
- ledit au moins un doigt comporte en outre une face latérale d'appui radial vers l'extérieur sur une surface d'appui correspondante dudit au moins un logement ;
- chacune des butées comprend deux doigts en saillie radialement vers l'extérieur par rapport audit axe et disposés axialement l'un derrière l'autre ;
- le bol comprend au moins une nervure annulaire qui s'étend autour dudit axe et qui définit ledit au moins un logement d'engagement desdites butées, cette nervure comportant au moins une encoche axiale configurée pour autoriser le montage des butées les unes après les autres.
- le bol comprend deux nervures annulaires, respectivement supérieure et inférieure, qui s'étendent autour dudit axe et qui définissent entre elles ledit au moins un logement d'engagement desdites butées, ces nervures comportant au moins une encoche axiale configurée pour autoriser le montage des butées les unes après les autres ;
- le système comprend en outre au moins un verrou qui est engagé dans une des lumières de la bague et dans ladite au moins une encoche, ledit verrou étant fixé à ladite bague ;
- le verrou est fixée par une ou des vis à la bague ;
- ledit verrou est situé du côté d'un extrados de la pale de l'aube, et est plus proche d'un bord de fuite de la pale que de son bord d'attaque ;
- avant le montage du verrou, la bague est apte à se déplacer en rotation autour dudit axe dans le bol, et après montage du verrou, la bague est immobilisée en rotation autour de cet axe par butée circonférentielle du verrou sur des côtés de l'encoche ;
   -- l'une des butées forme un verrou ;
   -- le verrou est indépendant desdites butées ;
   -- ledit pied ou ledit bulbe du pied est plein (c'est-à-dire qu'il est exempt de partie creuse évidée) ;
   -- le nombre de lumières de la paroi intermédiaire de la bague est compris entre 5 et 20, et de préférence entre 8 et 12 ;
   -- le système comprend en outre :
      - un palier de guidage à roulement inférieur s'étendant autour dudit axe et monté autour d'une partie inférieure du bol ;
      - un palier de guidage à roulement supérieur s'étendant autour dudit axe et monté autour d'une partie supérieure du bol ;
   -- au moins l'un des paliers de guidage a sa bague interne qui est intégrée audit bol ;
   -- au moins l'un des paliers de guidage est à contact oblique ;
   -- l'évidement est excentré par rapport à l'axe de calage.

Les paliers de guidage assurent la reprise des actions mécaniques issues des efforts aérodynamiques et centrifuges s'appliquant sur l'aube en fonctionnement. Le palier inférieur peut être configuré pour assurer la rétention de l'aube au centrifuge et le palier supérieur peut être configuré pour assurer la reprise des moments de flexion issus des efforts aérodynamiques et centrifuges. La distance entre les paliers, le long de l'axe de calage, génère un bras de levier suffisant pour empêcher l'aube de rotuler, quelle que soit la phase de vol.

La présente invention concerne également une turbomachine, en particulier d'aéronef, comportant au moins un système tel que décrit ci-dessus.

La présente invention concerne enfin un procédé de montage d'un système tel que décrit ci-dessus, dans lequel il comprend les étapes de :
a) insertion de la bague dans le bol,
b) insertion du pied de l'aube dans la bague, jusqu'à mise en appui de la portée inférieure du bulbe du pied sur la paroi inférieure de la bague,
c) engagement des butées dans les lumières de la paroi intermédiaire de la bague et dans ledit au moins un logement du bol, et
d) vissage de l'écrou sur la bague et serrage de l'écrou sur le bol de façon à forcer l'appui de la paroi inférieure de la bague sur la portée inférieure du bulbe du pied, l'appui de la portée supérieure de ce bulbe sur les butées, et l'appui de ces butées sur les surfaces d'appui complémentaires dudit au moins un logement du bol.

Avantageusement, l'étape c) comprend les sous-étapes successives suivantes :
c1) engagement d'une des butées dans une des lumières de la paroi intermédiaire de la bague, par déplacement de la butée en translation axiale à travers l'encoche du bol,
c2) déplacement en rotation de la bague et de la butée à l'intérieur du bol, autour de l'axe,
c3) engagement d'une autre des butées dans une des lumières de la paroi intermédiaire de la bague, par déplacement de la butée en translation axiale à travers l'encoche du bol,
c4) déplacement en rotation de la bague et des butées à l'intérieur du bol, autour de l'axe,
c5) répétition des étapes c3) et c4) pour les butées restantes,
c6) engagement du verrou dans la dernière lumière libre de la paroi intermédiaire de la bague, par déplacement du verrou en translation axiale à travers l'encoche du bol, et
c7) fixation du verrou à la bague.

Dans un mode de réalisation, la bague est déplacée d'un pas circonférentiel à chacune des étapes c2) et c4), ce pas circonférentiel étant égal à 360°/k, k étant le nombre de lumières de la paroi intermédiaire de la bague.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une aube d'hélice pour une turbomachine d'aéronef,
[Fig.2] la figure 2 est une vue à plus grande échelle d'une partie de la figure 1 et montre le pied de l'aube,
[Fig.3] la figure 3 est une vue schématique en coupe axiale d'un système selon l'invention de calage angulaire d'une aube d'hélice de turbomachine, selon une premier mode de réalisation de l'invention,
[Fig.3a] la figure 3a est une vue de détail à plus grande échelle d'une partie de la figure 3,
[Fig.4] la figure 4 est une vue schématique d'un bol du système de la figure 3, vu de dessus,
[Fig.5] la figure 5 est une vue schématique en perspective du bol du système de la figure 3,
[Fig.6] la figure 6 est une vue schématique en perspective d'une bague du système de la figure 3,
[Fig.7] la figure 7 est une vue schématique en perspective d'une butée du système de la figure 3, vu de dessus,
[Fig.8] la figure 8 est une vue schématique en perspective d'un verrou du système de la figure 3, vu de dessus,
[Fig.9] la figure 9 est une vue schématique du bol et de la bague montée dans le bol du système de la figure 3, vus de dessus, et illustre une étape d'un procédé de montage selon l'invention,
[Fig.10] la figure 10 est une vue schématique du bol, de la bague et d'une butée, vus de dessus, et illustre une autre étape du procédé,
[Fig.11] la figure 11 est une vue similaire à celle de la figure 10 et illustre une autre étape du procédé,
[Fig.12] la figure 12 est une vue schématique du bol, de la bague et de butées, vus de dessus, et illustre une autre étape du procédé,
[Fig.13] la figure 13 est une vue schématique du bol, de la bague, des butées et d'un verrou, vus de dessus, et illustre une autre étape du procédé,
[Fig.14] la figure 14 est une vue schématique en perspective de la bague, des butées et du verrou et donc sans le bol,
[Fig.15] la figure 15 est une vue schématique en coupe transversale de l'assemblage de la figure 13,
[Fig.16] la figure 16 est une vue de détail à plus grande échelle d'une partie de la figure 15,
[Fig.17] la figure 17 est une vue schématique en coupe axiale d'un système selon l'invention de calage angulaire d'une aube d'hélice de turbomachine, selon une variante de réalisation de l'invention, et
[Fig.17a] la figure 17a est une vue de détail à plus grande échelle d'une partie de la figure 17.

### Description détaillée de l'invention

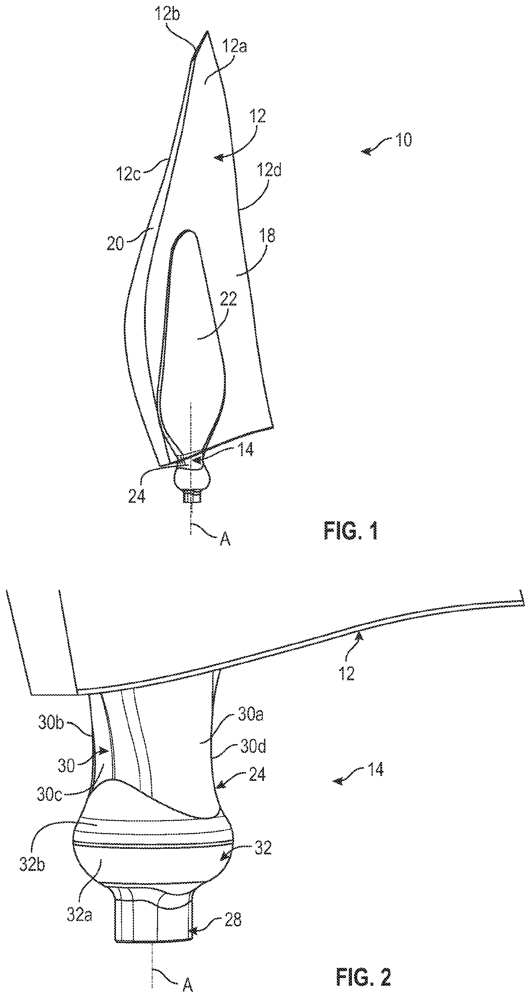

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*). Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22 qui comprend une partie formant une âme de la pale 12 et qui est destinée à être insérée dans la préforme 18 avant l'injection de résine, et une partie qui s'étend du côté opposé au sommet de la pale 14 pour former une partie du pied 14, appelé corps 24.

Le longeron 22 est préférentiellement en matériau composite à matrice organique époxy renforcée par fibres de carbone tissées 3D avec la direction chaîne majoritairement orientée radialement et la trame majoritairement orientée selon la corde de la pale à hauteur de veine aérodynamique. Cependant, le longeron peut également être un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

On désigné par A, l'axe d'allongement de l'aube 10 et de la pale 12 et en particulier l'axe de calage de l'aube 10, c'est-à-dire l'axe autour duquel la position angulaire de l'aube est ajustée. C'est en général aussi un axe radial qui s'étend donc suivant un rayon par rapport à l'axe de rotation de l'hélice équipée de cette aube.

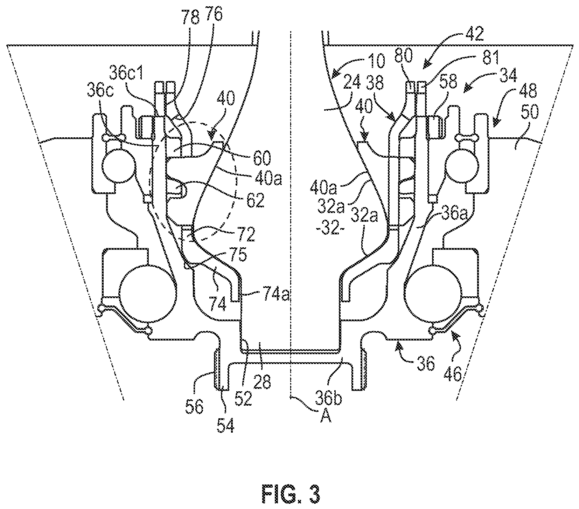

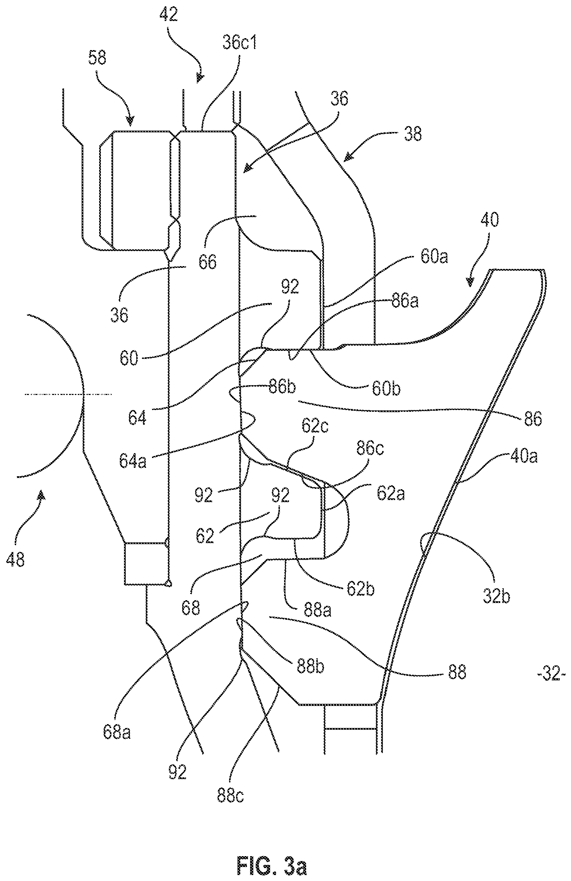

Le corps 24 du pied 14 a une forme particulière mieux visible à la figure 3. Le corps 24 comprend pour l'essentiel trois parties à savoir :
- une extrémité libre 28 située du côté opposé à la pale 12,
- une échasse 30 située du côté de la pale 12, et
- un bulbe 32 situé entre l'extrémité libre 28 et l'échasse 30.

L'extrémité libre 28 a une forme générale parallélépipédique dans l'exemple représenté. Cette extrémité 28 est de préférence désaxée ou décalée par rapport à l'axe A pour réaliser un détrompage ou indexage, comme cela sera expliqué plus en détail dans ce qui suit.

L'échasse 30 peut avoir une forme relativement complexe et peut être considérée comme comportant :
- deux flancs latéraux 30a, 30b, situés respectivement du côté de l'intrados 12a et de l'extrados 12b de la pale 12, qui convergent l'un vers l'autre le long de l'axe A et en direction du sommet de la pale 12, et
- deux bords, respectivement amont 30c et aval 30d, qui au contraire divergent l'un de l'autre le long de l'axe A et en direction du sommet de la pale 12.

Le bulbe 32 a une forme générale renflée ou bombée, ce renflement ou bombement s'étendant tout autour de l'axe A.

Le bulbe 32 présente deux portées périphériques, respectivement inférieure 32a et supérieure 32b, qui s'étendent autour de l'axe A. Dans l'exemple représenté, du fait de la forme du bulbe, la portée inférieure 32a est orientée vers le bas (c'est-à-dire du côté opposé à la pale 12) et radialement vers l'extérieur par rapport à l'axe A, et la portée supérieure 32b est orientée vers le haut (c'est-à-dire du côté de la pale 12) et radialement vers l'extérieur par rapport à l'axe A.

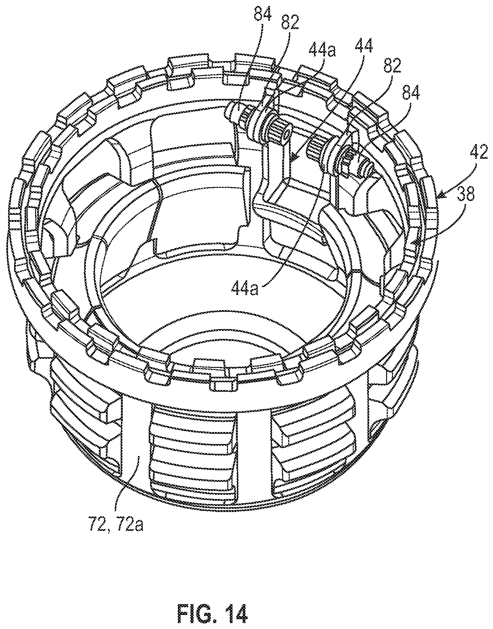

Les figures 3 à 16 illustrent un premier mode de réalisation d'un système 34 selon l'invention de calage angulaire d'une aube 10 telle qu'illustrée aux figures 1 et 2.

Le système 34 comprend pour l'essentiel un bol 36, une bague 38, des butées 40 et un écrou 42.

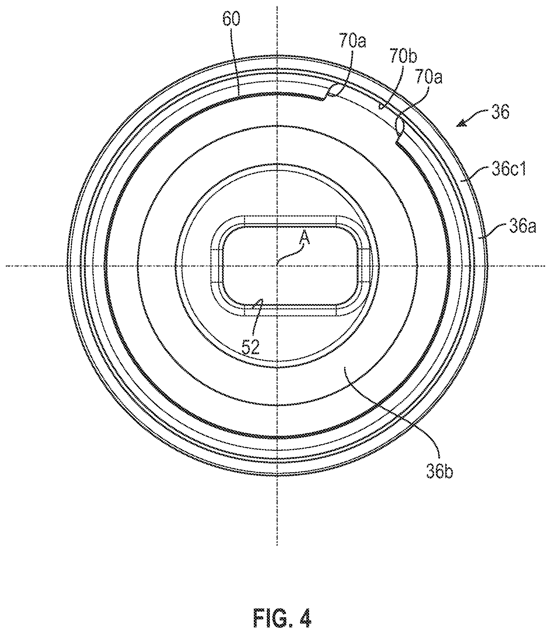

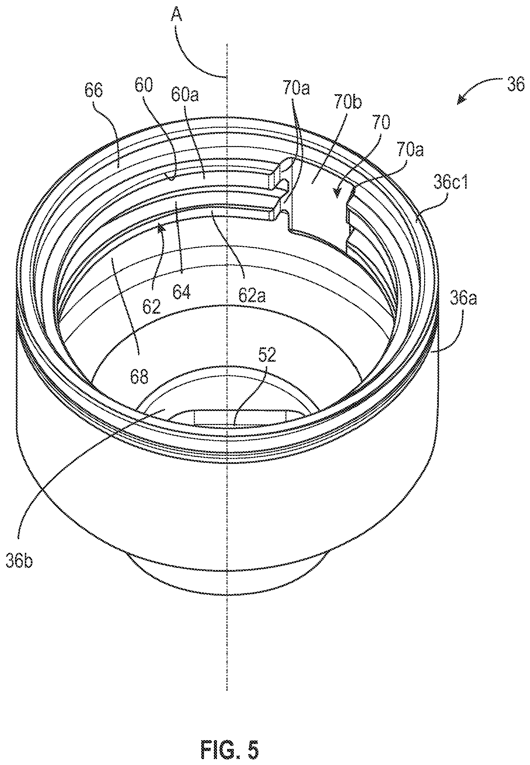

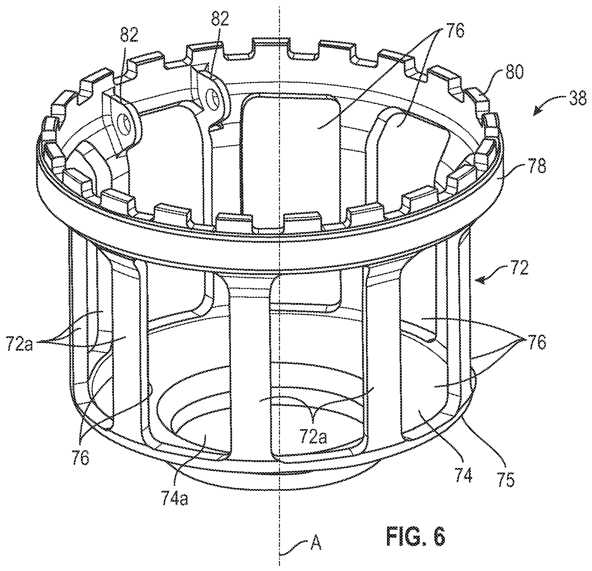

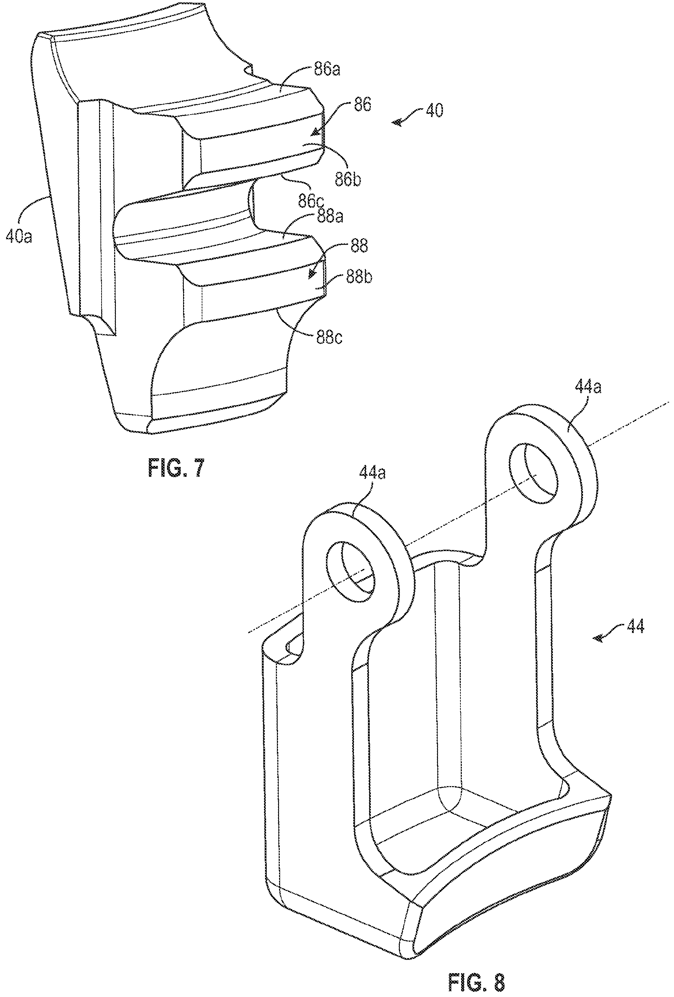

Le bol 36 est représenté seul aux figures 4 et 5. La bague 38 est représentée seule à la figure 6. Les butées 40 sont de préférence identiques et une de ces butées 40 est représentée à la figure 7. L'écrou 42 est visible aux figures 3 et 9 à 14 notamment.

Les figures 3, 8 et 13-15 montrent d'autres éléments du système 34 qui sont toutefois facultatifs. C'est notamment le cas du verrou 44, et des paliers à roulement 46, 48.

Les paliers 46, 48 sont montés autour du bol 36, entre le bol 36 et un carter 50 de la turbomachine qui peut être un moyeu de l'hélice. Les paliers 46, 48 sont ici au nombre de deux et sont respectivement un palier inférieur 46 et un palier supérieur 48.

Les paliers 46, 48 sont du type à roulement à billes. Dans l'exemple représenté, ils ont des diamètres différents et leurs billes ont également des diamètres différents.

Le palier 46 s'étend sensiblement autour de la portée inférieure 32a et/ou de l'extrémité libre 28 du pied 14 dans l'exemple représenté. Ce palier 46 a un diamètre plus petit que l'autre palier 48, et ses billes ont un diamètre supérieur à celles de l'autre palier 48.

Le palier 46 est à contact oblique. Dans l'exemple représenté, les points ou surfaces d'appui des billes sur les chemins de roulement de leurs bagues sont situés sur une surface tronconique qui s'étend le long de l'axe A et dont le plus grand diamètre est situé du côté du sommet de l'aube.

Le palier 48 s'étend sensiblement autour de la portée supérieure 32b du pied 14. Le palier 48 est à contact oblique. Dans l'exemple représenté, les points ou surfaces d'appui des billes sur les chemins de roulement de leurs bagues sont situés sur une surface tronconique qui s'étend le long de l'axe A et dont le plus grand diamètre est situé du côté de l'extrémité libre du pied de l'aube. Le carter 50 porte les bagues externes des paliers 46, 48 et leurs bagues internes sont portées par le bol 36 ou intégrées à ce dernier, comme c'est le cas dans l'exemple représenté de la bague interne du palier 46.

Les paliers 46, 48 assurent le centrage et le guidage du bol 36 autour de l'axe A vis-à-vis du carter 50. Le bol 36 sert donc de pivot pour l'aube 10, par rapport au carter 50.

Le bol 36 comporte une paroi annulaire 36a s'étendant autour de l'axe A. Cette paroi 36a comporte une extrémité axiale inférieure fermée par une paroi de fond 36b, et une extrémité axiale supérieure ouverte et configurée pour autoriser le montage du pied 14 de l'aube 10 à l'intérieur du bol 36. Il est considéré ici que l'axe A du bol 36 est celui de l'aube 10 en correspondant à l'axe de la rotation pour le changement de calage angulaire de l'aube, sensiblement radialement par rapport à la rotation de l'hélice.

La paroi de fond 36b est configurée pour coopérer par complémentarité de formes avec l'extrémité libre du pied 14, et donc avec l'extrémité 28 du corps 24, de façon à ce que le bol 36 soit solidarisé en rotation avec le pied 12 autour de l'axe.

Dans le cas présent, on comprend que la paroi de fond 36b comprend un évidement 52 ayant une section transversale non circulaire, et en particulier rectangulaire, et configuré pour recevoir l'extrémité 28 (figure 3). Comme on le voit à la figure 4, cet évidement 52 est excentré par rapport à l'axe A de façon analogue à l'extrémité 28. Cet excentrement permet un indexage et un détrompage lors de l'insertion et du montage du pied 12 dans le bol 36, une seule position d'engagement de l'extrémité 28 dans l'évidement 52 étant possible.

L'évidement 52 est situé sur une face supérieure ou interne de la paroi de fond 36b du bol 36, qui est donc située à l'intérieur du bol 36 et orientée du côté du pied 12.

Le système 34 génère un couple au pied d'aube qui s'oppose au moment de torsion issu des efforts aérodynamiques et des efforts centrifuges. La transmission des efforts entre le bol 36 et le pied 12 est directe, le moment de torsion s'appliquant directement sur le corps du pied.

La paroi de fond 36b comprend une face inférieure ou externe, qui est située du côté opposé au pied 14, et qui comprend un prolongement cylindrique 54 s'étendant le long de l'axe A et comportant un filetage externe ou des cannelures rectilignes externes 56 pour l'accouplement en rotation du système avec un mécanisme de changement de pas qui n'est pas illustré et qui est commun aux différents systèmes 34 et aubes 10 de l'hélice (cf. figure 3).

La paroi 36a du bol 36 comprend à sa périphérie externe un chemin de roulement sur laquelle roule directement les billes du palier 46. Ce chemin de roulement comprend une surface annulaire à section incurvée concave. Ce chemin de roulement est ici située à l'extrémité inférieure du bol 36 et de la paroi 36a.

La bague interne du palier 48 est engagée sur et autour de l'extrémité supérieure libre 36c du bol 36 et de la paroi 36a. Cette extrémité de la paroi 36a comprend une surface cylindrique externe de montage de cette bague interne ainsi qu'un filetage externe de vissage d'un écrou 58 destiné à prendre appui axialement sur la bague interne du palier 48 pour la maintenir serrée axialement contre un épaulement cylindrique externe du bol 36.

L'extrémité supérieure libre 36c du bol 36 comprend une surface 36c1 qui s'étend dans un plan perpendiculaire à l'axe A (figures 3 à 5).

Dans l'exemple représenté, la paroi 36a du bol 36 comprend à sa périphérie interne deux nervures annulaires 60, 62 qui s'étendent autour de l'axe A et qui sont donc coaxiales. Les nervures 60, 62 sont disposées à distance axiale l'une de l'autre et l'une au-dessus de l'autre, et sont donc respectivement des nervures supérieure 60 et inférieure 62.

La nervure supérieure 60 assure la retenue radiale des butées 40 et donc du pied 14 de l'aube 10, et la nervure 62 forme une redondance de ces moyens de retenue et assure la fonction *failsafe* de l'assemblage.

Les nervures 60 ,62 définissent entre elles un premier logement annulaire 64 qui s'étend autour de l'axe A. Par ailleurs, la nervure supérieure 60 peut être considérée comme délimitant un autre logement 66, dit supérieur, situé au-dessus de la nervure 60, et la nervure inférieure 62 peut être considérée comme délimitant également un autre logement 68, dit inférieur, situé au-dessous de la nervure 62 (figures 3 et 5).

Les nervures 60, 62 s'étendent en continu sur moins de 360° car elles sont interrompues par au moins une encoche 70 axiale, comme cela est visible aux figures 4 et 5. L'encoche 70 a par exemple une étendue angulaire autour de l'axe A comprise entre 20 et 60°, et de préférence entre 30 et 50°. Les nervures 60, 62 ont donc de préférence chacune une étendue angulaire autour de l'axe A comprise entre 300 et 340°, et de préférence entre 310 et 330°.

L'encoche 70 comprend des parois latérales 70a qui se font face et qui sont reliées entre elles par une paroi de fond 70b qui est orientée vers l'axe A.

Comme on le voit à la figure 3a, la nervure supérieure 60 comprend à sa périphérie interne une surface cylindrique interne 60a et à son extrémité inférieure une surface annulaire 60b s'étendant dans un plan perpendiculaire à l'axe A.

La nervure inférieure 62 comprend à sa périphérie interne une surface cylindrique interne 62a, à son extrémité inférieure une surface annulaire 62b s'étendant dans un plan perpendiculaire à l'axe A, et à son extrémité supérieure une surface tronconique 62c évasée du côté de la pale 12 de l'aube 10.

Entre les nervures 60, 62, le logement 64 comprend au fond une surface cylindrique interne 64a. Le logement 68 comprend au fond une surface cylindrique interne 68a.

La bague 38 comprend une paroi intermédiaire 72 de forme générale cylindrique qui est reliée à son extrémité inférieure à une paroi annulaire inférieure 74.

La paroi intermédiaire 72 est ajourée et comprend des lumières 76 traversantes. Dans l'exemple représenté, la paroi 72 comprend une rangée annulaire de lumières 76 qui sont identiques et régulièrement espacées et distribuées autour de l'axe A.

Les lumières 76 sont configurées pour permettre le montage des butées 40 et sont donc dimensionnées à cet égard. Par ailleurs, le nombre des lumières 76 est au moins égal au nombre des butées 40 de façon à ce que chacune des butées 40 puisse être montée dans une de ces lumières 76.

Les lumières 76 ont ici une forme générale rectangulaire et présente une forme générale allongée le long de l'axe A. Les lumières 76 sont séparées les unes des autres par des colonnettes 72a de la paroi 72. Les colonnettes 72a sont rectilignes et parallèles entre elles et à l'axe A.

La paroi inférieure 74 comprend un orifice central 74a destiné à être traversé par l'extrémité inférieure 28 du pied de l'aube, comme cela est visible à la figure 3.

La paroi 74 est configurée pour recevoir en appui la portée inférieure 32a du bulbe 32 du pied 14 de l'aube 10. Comme cela est visible à la figure 3, la paroi 74 est de préférence conformée pour épouser la forme du bulbe 32 et de cette portée 32a. La paroi 32 a ici une forme générale tronconique qui est évasée du côté de la pale 12 de l'aube 10.

Lors du montage du pied 14 de l'aube 10 dans la bague 38, la portée inférieure 32a du bulbe 32 prend appui axialement sur la paroi 74. Du fait de la forme tronconique de cette paroi 74 dans l'exemple représenté, on comprend que cet appui a en tout point une composante axiale et une composante radiale par rapport à l'axe A.

Au niveau de la liaison de l'extrémité inférieure de la paroi 72 à la périphérie externe de la paroi 74, la bague 38 comprend une portée annulaire 75 (figures 3 et 6).

A son extrémité supérieure, la paroi 72 comprend un filetage 78 de vissage de l'écrou 42. Ce filetage 78 est ici situé à la périphérie externe de la bague 38 et plus particulièrement à la périphérie externe de l'extrémité supérieure libre de la bague 38.

La figure 6 montre que cette extrémité supérieure libre de la bague 38 comprend une denture annulaire 80 qui est configurée pour coopérer avec un outil (non représenté) d'entrainement en rotation de la bague 38 autour de l'axe A.

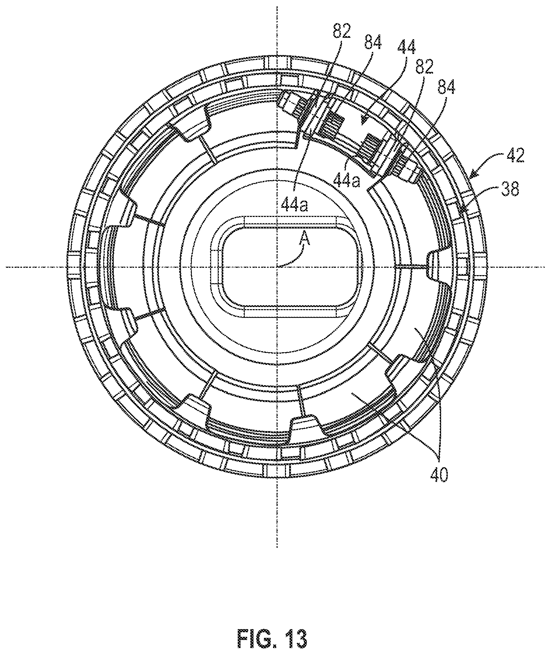

La figure 6 montre également que la bague 38 peut comprendre, à l'extrémité supérieure de la paroi 72 et à sa périphérie interne, des éléments 82 de fixation du verrou 44. Ces éléments de fixation 82 peuvent se présenter sous la forme de deux pattes disposées de part et d'autre de l'une des lumières 76, à l'extrémité supérieure de celle-ci. Les pattes sont parallèles entre elles et à l'axe A et comprennent chacune un orifice de montage d'une vis ou d'un boulon 84 (cf. figures 13-14). Les orifices des pattes sont sensiblement alignés et s'étendent dans un plan perpendiculaire à l'axe A.

Comme cela est visible à la figure 3, la bague 38 est montée dans le bol 36 de façon à ce que ses parois 72, 74 soient situées dans le bol 36 et que son extrémité supérieure libre soit située juste au-dessus de l'extrémité supérieure 36c du bol 36 et de sa surface 36c1.

L'écrou 42 comprend un filetage interne et peut être vissé, ou du moins prévissé, sur le filetage 78 de la bague 38, de préférence avant son insertion dans le bol 36. L'écrou 42 est apte à prendre appui axialement sur la surface 36c1 du bol 36.

Le prévissage de l'écrou 42 sur la bague 38 peut permettre à l'écrou 42 de venir en appui axial sur la surface 36c1 afin d'éviter que la paroi inférieure 74 de la bague 38 vienne au contact du bol 36 et de sa paroi de fond 36b, lors de l'insertion de la bague 38. Toutefois, de préférence, la portée 75 précitée de la bague 38 est configurée pour venir au contact du bol 36 afin d'éviter cet appui axial de l'écrou 42 sur la surface 36c1.

Lors de l'insertion de la bague 38 dans le bol 36, la paroi intermédiaire 72 et en particulier les surfaces radialement externes des colonnettes 72a précitées, peu(ven)t coopérer par glissement avec les surfaces cylindriques internes 60a, 62a des nervures 60, 62, afin de réaliser un centrage et un guidage de la bague 38 dans le bol 36.

Les figures 3 et 9 à 14 montrent que l'écrou 42 peut comprendre à son extrémité supérieure une denture annulaire 81 qui est configurée pour coopérer avec un outil (non représenté) d'entrainement en rotation de l'écrou 42 autour de l'axe A. On peut constater que les dentures 80, 81 sont similaires.

Le nombre de butées 40 est au plus égal au nombre de lumières 76 de la bague 38. Dans l'exemple représenté, le nombre de butées 40 est égal au nombre de lumières 76 moins un, car l'une des butées 40 est remplacée par le verrou 44. Le nombre de butées 40 est compris entre 5 et 20, et de préférence entre 7 et 11. Il est de 9 dans l'exemple représenté. On comprend donc qu'il y a neuf lumières 76 dans la bague 38.

Les butées 40 sont disposées autour de l'axe A et sont montées autour du pied 14 et dans le bol 36. Ces butées 40 sont engagées dans les lumières 76 et dans au moins un des logements 64, 66, 68, et sont destinées à prendre appui sur la portée supérieure 32b du bulbe 32 du pied 14, au moins en direction axiale.

Chacune des butées 40 comprend une face d'appui 40a sur la portée supérieure 32b du bulbe 32 du pied. Cette face d'appui 40a étant conformée de sorte que l'appui ait en tout point une composante axiale et une composante radiale par rapport à l'axe A.

Par ailleurs, chacune des butées 40 comprend au moins un doigt en saillie radialement vers l'extérieur par rapport à l'axe A et comprend deux doigts 86, 88 de ce type dans l'exemple représenté. Les doigts 86, 88 sont de préférence à distance l'un de l'autre et disposés l'un au-dessus de l'autre. On comprend que l'un des doigts 86 est destiné à être engagé dans le logement 64, l'autre des doigts 88 étant destiné à être engagé dans le logement 68 dans l'exemple représenté à la figure 3.

Chaque butée 40 comprend un doigt supérieur 86 qui comporte une face supérieure 86a, une face latérale 86b, et une face inférieure 86c. Les faces 86a et 86b sont complémentaires aux surfaces 60b, 64a et sont configurées pour venir en appui sur ces surfaces, respectivement en direction axiale et radiale, lors du montage de la butée 40, comme cela est visible à la figure 3a. La face 86c et la surface 62c peuvent être complémentaires mais peuvent être séparées par un jeu au montage ou après serrage de l'écrou 42.

Chaque butée 40 comprend un doigt inférieur 88 qui comporte une face supérieure 88a, une face latérale 88b, et une face inférieure 88c. La face 88b est complémentaire à la surface 68a et est configurée pour venir en appui sur cette surface 68a, en direction radiale, lors du montage de la butée 40, comme cela est visible à la figure 3a. La face 88a et la surface 62b peuvent être complémentaires mais peuvent être séparées par un jeu au montage ou après serrage de l'écrou.

Le doigt inférieur 88 de chaque butée 40 n'est donc pas destiné à prendre appui axialement sur la nervure inférieure 62, du fait de la présence de ce jeu. En cas de rupture de la butée 40, son doigt inférieur 88 peut venir en appui axial sur la nervure inférieure 62, ce qui permet d'assurer la retenue radiale de l'aube 10 et forme la fonction *failsafe* précitée.

Avantageusement, le jeu au niveau du doigt inférieur 88 de chaque butée 40 est suffisant pour que le balourd généré par le déplacement de l'aube 10 en cas de rupture du doigt supérieur 86 d'une ou plusieurs butées 40 puisse être détecté.

Les butées 40 sont destinées à être montées dans les lumières 76 et dans les logements 64, 68 les unes après les autres, grâce à l'encoche 70 formée dans les nervures 60, 62. Les butées 40 ont donc des dimensions telles qu'elles peuvent être engagées dans les lumières 76, de préférence de manière ajustée, ainsi que dans l'encoche 70.

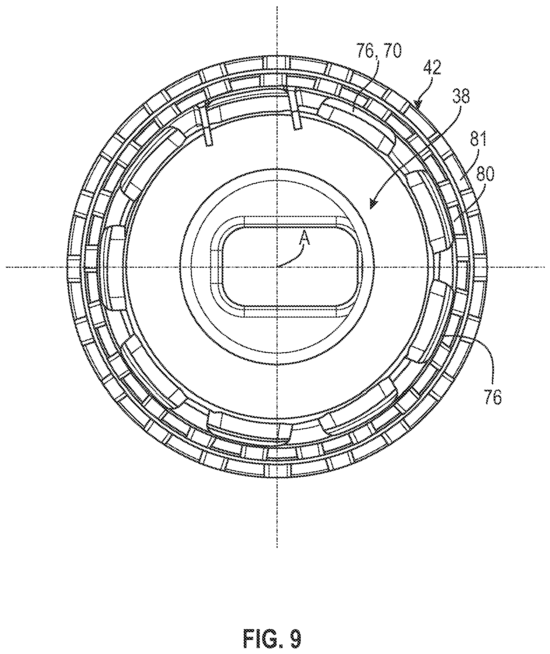

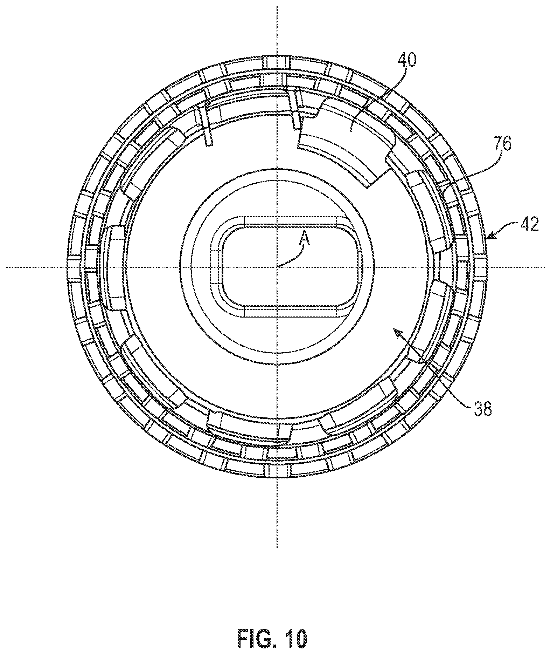

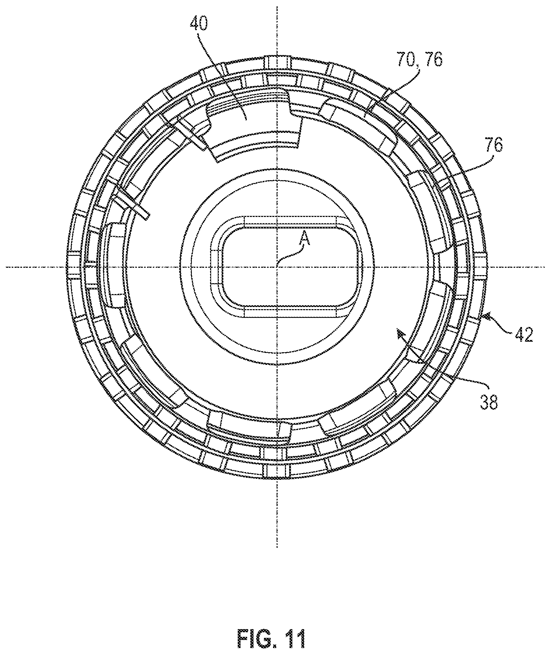

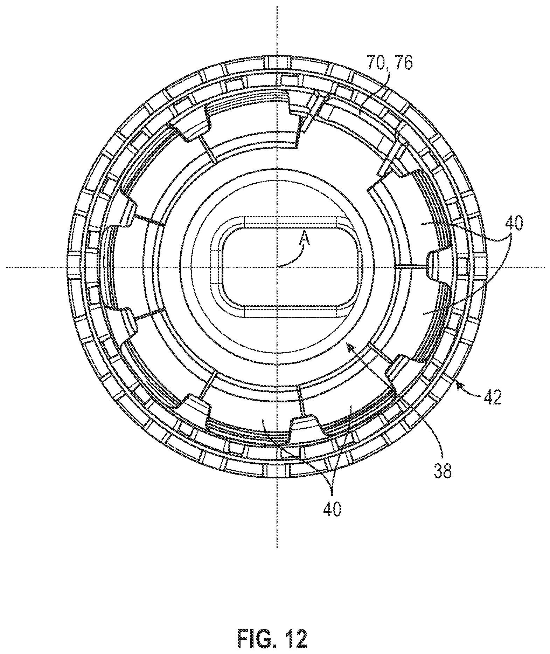

Pour cela, comme cela est représenté à la figure 9, il convient d'aligner axialement l'une des lumières 76 avec l'encoche 70. Une première butée 40 est alors insérée par translation axiale du haut vers le bas dans cette lumière 76 et l'encoche 70 de façon à ce que le doigt supérieur 86 soit situé dans un plan perpendiculaire à l'axe A qui passe par le logement 64, et que le doigt inférieur 88 soit situé dans un plan perpendiculaire à l'axe A qui passe par le logement 68 (figure 10). Du fait de la coopération par butée circonférentielle entre les côtés de la butée 40 et les colonnettes 72a de la bague 38, la butée 40 est rendue solidaire en rotation de la bague 38. On comprend donc qu'une rotation de la bague 38 dans le bol 36, au moyen de l'outil précité, permet de déplacer la butée 40 autour de l'axe A de façon à l'éloigner de l'encoche 70 (figure 11). Les autres butées sont montées de la même façon dans les lumières 76 de la bague 38 et dans les logements 64, 68 (figure 12).

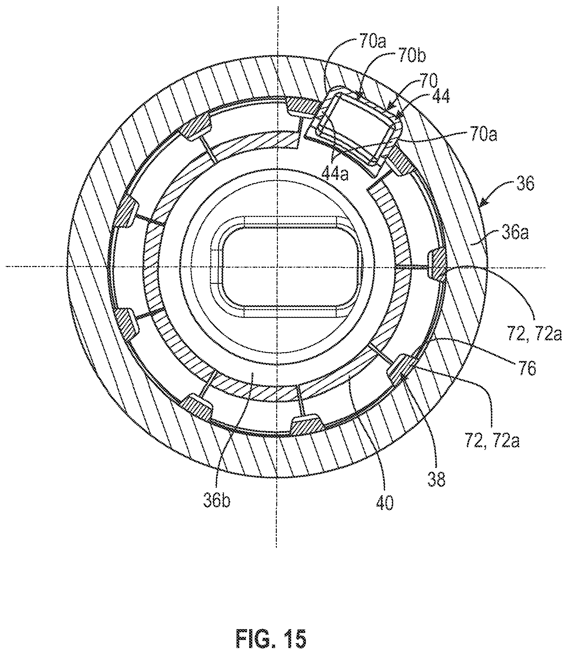

Le verrou 44 est destiné à être monté dans la dernière lumière 76 libre de la bague 38, après montage des butées 40 (figures 12 à 15). Il est également destiné à être monté dans l'encoche 70 de la bague 38. Il est configuré et en particulier dimensionné pour être monté de manière ajusté dans l'encoche 70 de façon à ce que ses côtés puissent coopérer par butée circonférentielle avec les parois latérales 70a de l'encoche 70. On constate aussi à la figure 15 que le verrou 44 est destiné à être plaqué radialement contre la surface paroi de fond 70b de l'encoche 70.

Le verrou 44 est ici configuré pour être fixé à la bague 38 et comprend dans l'exemple représenté des pattes latérales 44a positionnés sur les pattes 82 de la bague 38. Les pattes 44a comprennent des orifices alignés avec les orifices des pattes et destinés à recevoir les boulons 84. La fixation du verrou 44 à la bague 38 permet de les immobiliser l'un par rapport à l'autre. Par ailleurs, l'engagement du verrou 44 dans l'encoche 70 permet d'immobiliser en rotation la bague 38 dans le bol 36.

Après montage du verrou 44, on comprend donc qu'il n'est plus possible de déplacer la bague 38 dans le bol 36. La position du verrou 44 autour du pied 14 de l'aube 10 peut être choisie. Il est avantageux de le positionneur du côté de l'extrados 12b de la pale 12 de l'aube 10, et plus proche du bord de fuite 12d de la pale que de son bord d'attaque 12c.

Après montage du verrou 44, le vissage de l'écrou 42 peut être poursuivi et en particulier le serrage de l'écrou 42 sur la surface 36c1 peut être réalisé de façon à forcer :
- l'appui de la paroi inférieure 74 de la bague 38 sur la portée inférieure 32a du bulbe 32 du pied 14,
- l'appui de la portée supérieure 32b de ce bulbe 32 sur les faces 40a des butées 40, et
- l'appui de ces butées 40 sur les surfaces 60b, 64a et 68a des logements 64, 68 du bol 36.

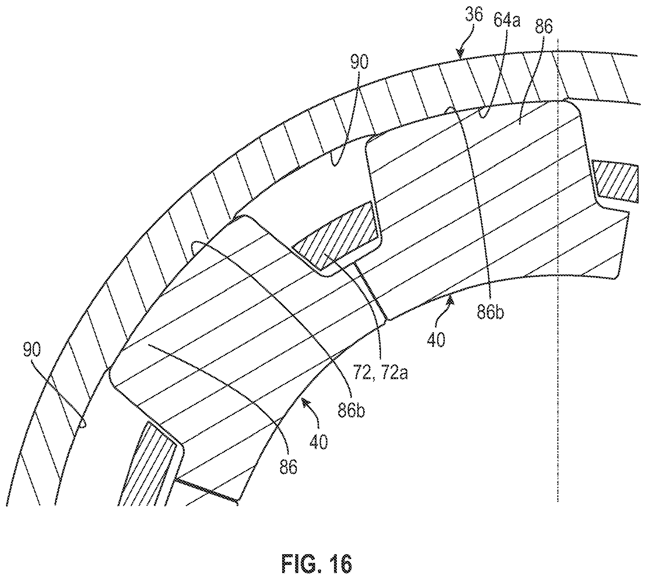

La figure 16 montre que des rainures de décharge 90 peuvent être formées sur la surface 64a du bol 36, en regard de chacune des colonnettes 72. Ces rainures 90 génèrent des discontinuités dans la surface cylindrique interne 64a du bol 36.

La figure 3a montre que des gorges de décharge 92 peuvent être ménagées au niveau des liaisons entre les surfaces 60b et 64a, entre les surfaces 64a et 62c, et/ou entre les surfaces 62b et 68a, de façon à ce que les rayons de raccordement permettent de mieux répartir les efforts et les contraintes mécaniques en fonctionnement. De cette façon, les surfaces 60b, 64a, 68a de contact du bol 36 sont toujours un peu plus petites que les faces 86a, 86b, 88b des butées 40 en vis-à-vis. Cela permet de ne pas avoir de pic d'effort local en extrémité de portée sur le bol 36 (appui radial et axial).

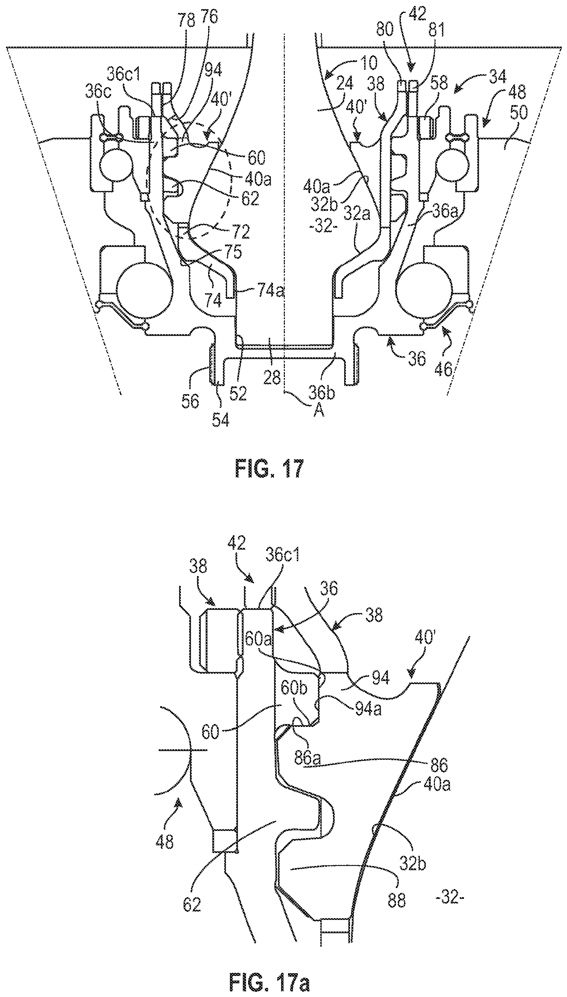

Les figures 17 et 17a représentent une variante de réalisation du système 34 et en particulier des butées 40' qui comprennent ici en plus un doigt 94 supplémentaire qui s'étend axialement du côté de la pale 12 de l'aube 10 en position de montage, et qui comprend une face latérale 94a d'appui radialement vers l'extérieur.

Comme cela est visible à la figure 17a, au montage des butées 40', les faces 86a sont destinées à être appliquées axialement sur la surface 60b de la nervure 60, et les faces 94a sont destinées à être appliquées axialement sur la surface 60a de cette même nervure 60. Les autres faces des butées 40' sont séparées par des jeux des surfaces en regard du bol 36.

Cette variante permet de limiter les contraintes dans le bol 36 et lui assurer une bonne robustesse. Elle diffère de la solution initiale par le fait que les butées 40' ne viennent pas se centrer dans le bol 38 sur leur diamètre extérieur le plus grand, mais sur le diamètre intérieur du doigt supérieur 86 du bol 36.

L'appui radial (travail en expansion) des butées 40' se fait sur le diamètre intérieur de la nervure supérieure 60. Ainsi, la zone du bol 36 travaillant en traction (retenant l'aube 10 en centrifuge) n'est pas exposée à cet effort. Par ailleurs, l'appui radial se faisant sur une partie plus épaisse du bol 36, la déformée du bol 36 est moindre au bénéfice du fonctionnement du palier supérieur 48.

L'appui axial des butées 40' se fait sur la surface inférieure 60b de la nervure supérieur 60 du bol 36, en isolant la zone critique de cet appui de la zone critique en traction du bol 36 par une distance suffisante.

La présente invention concerne également un procédé de montage d'un système 34 tel que décrit dans ce qui précède, qui comprend les étapes de :
a) insertion de la bague 38 dans le bol 36,
b) insertion du pied 14 de l'aube 10 dans la bague 38, jusqu'à mise en appui de la portée inférieure 32a du bulbe 32 du pied 14 sur la paroi inférieure 74 de la bague 38,
c) engagement des butées 40, 40' dans les lumières 76 de la paroi intermédiaire 72 de la bague 38 et de leurs doigts 86, 88 dans les logements 64, 68 du bol 36, et
d) vissage de l'écrou 42 sur la bague 38 et serrage de l'écrou 42 sur le bol 36, et en particulier sur la surface 36c1, de façon à forcer l'appui de la paroi inférieure 74 de la bague 36 sur la portée inférieure 32a du bulbe 32 du pied 14, l'appui de la portée supérieure 32b de ce bulbe 32 sur les butées 40, 40', et l'appui de ces butées 40, 40' sur les surfaces 60b, 64a, 68a ou 60a, 60b des nervures du bol 36.

Comme évoqué dans ce qui précède, l'étape c) comprend de préférence les sous étapes successives suivantes :
c1) engagement d'une des butées 40, 40' dans une des lumières 76 de la paroi intermédiaire 72 de la bague 38, par déplacement de la butée 40, 40' en translation axiale à travers l'encoche 70 du bol 36,
c2) déplacement en rotation de la bague 38 et de la butée 40, 40' à l'intérieur du bol 36, autour de l'axe A,
c3) engagement d'une autre des butées 40, 40' dans une des lumières 76 de la paroi intermédiaire 72 de la bague 38, par déplacement de la butée 40, 40' en translation axiale à travers l'encoche 70 du bol 36,
c4) déplacement en rotation de la bague 38 et des butées 40, 40' à l'intérieur du bol 36, autour de l'axe A,
c5) répétition des étapes c3) et c4) pour les butées 40, 40' restantes,
c6) engagement du verrou 44 dans la dernière lumière 76 libre de la paroi intermédiaire 72 de la bague 38, par déplacement du verrou 44 en translation axiale à travers l'encoche 70 du bol 36, et
c7) fixation du verrou 44 à la bague 38.

On comprend ainsi que les butées 40, 40' sont montées les unes après les autres par un montage du type à crabotage dans le bol 36. Par ailleurs, on comprend également que les butées 40, 40' sont montées les unes après les autres dans le bol 36 de la même manière que le chargement de balles dans le barillet rotatif d'une arme à feu, le bol 36 formant ici le barillet.

A chacune des étapes c2) et c4), la bague 38 est de préférence déplacée d'un pas circonférentiel, ce pas circonférentiel étant égal à 360°/k, k étant le nombre de lumières 76 de la paroi intermédiaire 72 de la bague 38. Dans le cas particulier précité où k est égal à 9, on comprend donc que le pas circonférentiel représente 40° autour de l'axe A.

D'autres variantes de réalisation non représentées sont envisageables, parmi lesquelles :
- le verrou 44 peut être remplacé par un dispositif de verrouillage et de blocage en rotation entre la bague 38 et le bol 36, et situé par exemple entre les extrémités libres supérieures de la bague 38 et du bol 36 ;
- le verrou 44 pourrait également être configuré pour prendre appui sur le pied d'aube 14 en vue de participer à sa retenue et pour participer à la reprise des efforts sur l'aube en fonction, ce qui n'est pas le cas dans les précédents modes de réalisation ; le verrou 44 pourrait ainsi être formé par une des butées 40, 40' qui serait associée à des moyens de fixation à la bague 38 et/ou au bol 36.

La présente invention présente de nombreux avantages parmi lesquels :
- un montage simple et rapide du système en vue de pouvoir remplacer l'aube 10 sans démonter le moteur ou le bol 36 ;
- une solution fortement sécurisée et robuste:
   - en cas de rupture de la nervure supérieure du bol 36, l'aube 10 est retenue par la nervure inférieure 62 *(failsafe)* et l'extrémité supérieure 36c du bol 36 est en outre retenue par l'écrou 42;
   - en cas de rupture de toutes les colonnettes 72a de la bague 38, l'aube 10 reste retenue par la nervure supérieure 60 (sans préserrage) et l'extrémité supérieure de la bague 38 reste prisonnière autour du pied d'aube 14;
   - en cas de rupture d'une des butées 40, 40', il reste encore assez de butées pour retenir l'aube 10 (redondance) ;
- les détails de conception (gorges 90, 92 et rainures de décharge par exemple, positionnées) concourent à la robustesse de l'assemblage ;
- l'aube 10 est bien tenue dans toutes les phases de fonctionnement.

## Revendications

1. Système (34) de commande du calage angulaire d'une aube (10) d'hélice, pour une turbomachine d'aéronef, comprenant :
- une aube (10) comportant une pale (12) reliée à un pied (14), l'aube (10) comportant un axe de calage (A) et son pied (14) comportant un bulbe (32) qui présente deux portées, respectivement inférieure (32a) et supérieure (32b), qui s'étendent autour dudit axe (A), et
- un bol (36) comportant une paroi annulaire (36a) s'étendant autour dudit axe (A), cette paroi annulaire (36a) comportant une extrémité axiale inférieure fermée par une paroi de fond (36b), et une extrémité axiale supérieure ouverte et configurée pour autoriser le montage du pied (14) de l'aube (10) à l'intérieur du bol (36), la paroi de fond (36b) comprenant un évidement (52) ayant une section transversale non circulaire et configuré pour recevoir une extrémité libre (28) de forme complémentaire dudit pied (14) de façon à ce que le bol (36) soit solidarisé en rotation avec le pied (14) autour dudit axe (A), le système comprenant en outre :
- une bague (38) qui s'étend autour dudit axe (A) et qui est montée autour du pied (14) et dans le bol (36), cette bague (38) comportant une paroi inférieure (74) qui est située dans le bol (36) et qui comprend une ouverture (74a) traversée par ladite extrémité libre (28) du pied (14), ladite portée inférieure (32a) du bulbe (32) du pied (14) étant configurée pour prendre appui au moins en direction axiale sur cette paroi inférieure (74), du côté opposé à la pale (12) de l'aube (10), la bague (38) comportant en outre une paroi intermédiaire (72) ajourée et un filetage (78) à une extrémité supérieure,
- des butées (40, 40') qui sont disposées autour dudit axe (A) et qui sont montées autour du pied (14) et dans le bol (36), ces butées (40, 40') étant engagées dans des lumières (76) de ladite paroi intermédiaire (72) et dans au moins un logement (64, 68) de la paroi annulaire (36a) du bol (36), ladite portée supérieure (32b) du bulbe (32) du pied (14) étant configurée pour prendre appui au moins en direction axiale sur ces butées (40, 40'), du côté de la pale (12) de l'aube (10), et
- un écrou (42) vissé sur le filetage (78) de la bague (38) et configuré pour prendre appui axialement sur ledit bol (36) de façon à ce que le serrage de l'écrou (42) force l'appui de la paroi inférieure (74) de la bague (38) sur la portée inférieure (32a) du bulbe (32) du pied (14), l'appui de la portée supérieure (32b) de ce bulbe (32) sur les butées (40, 40'), et l'appui de ces butées (40, 40') sur des surfaces d'appui (60a, 60b, 64a, 68a) complémentaires dudit au moins un logement (64, 68) du bol (36).

2. Système (34) selon la revendication 1, dans lequel le nombre de butées (40, 40') est inférieur ou égal au nombre de lumières (76) de la paroi intermédiaire (72) de la bague (38), chacune des butées (40, 40') étant engagée dans une de ces lumières (76).

3. Système (34) selon la revendication 2, dans lequel le nombre de butées (40, 40') est compris entre 5 et 20.

4. Système (34) selon l'une des revendications précédentes, dans lequel la paroi inférieure (74) de la bague (38) a une forme générale tronconique évasée du côté de la pale (14) de sorte que l'appui de la portée inférieure (32a) du bulbe (32) du pied (14) sur cette paroi inférieure (74) ait en tout point une composante axiale et une composante radiale par rapport audit axe (A).

5. Système (34) selon l'une des revendications précédentes, dans lequel chacune des butées (40, 40') comprend une face d'appui (40a) sur la portée supérieure (32b) du bulbe (32) du pied (14), cette face d'appui (40a) étant conformée de sorte que l'appui ait en tout point une composante axiale et une composante radiale par rapport audit axe (A).

6. Système (34) selon l'une des revendications précédentes, dans lequel l'écrou (42) est vissé à l'extérieur de la bague (38) et/ou prend appui axialement sur une extrémité libre supérieure (36c) du bol (36).

7. Système (34) selon l'une des revendications précédentes, dans lequel chacune des butées (40, 40') comprend au moins un doigt (86, 88) en saillie radialement vers l'extérieur par rapport audit axe (A), ledit au moins un doigt (86, 88) comportant une face supérieure (86a) d'appui axial sur une surface d'appui (60b) correspondante dudit au moins un logement (64).

8. Système (34) selon la revendication précédente, dans lequel ledit au moins un doigt (86, 88) comporte en outre une face latérale (86b) d'appui radial vers l'extérieur sur une surface d'appui (64a) correspondante dudit au moins un logement (64).

9. Système (34) selon la revendication 7 ou 8, dans lequel chacune des butées (40, 40') comprend deux doigts (86, 88) en saillie radialement vers l'extérieur par rapport audit axe (A) et disposés axialement l'un derrière l'autre.

10. Système (34) selon l'une des revendications précédentes, dans lequel le bol (36) comprend au moins une nervure annulaire (60, 62) qui s'étend autour dudit axe (A) et qui définit ledit au moins un logement (64, 68) d'engagement desdites butées (40, 40'), cette nervure (60, 62) comportant au moins une encoche axiale (70) configurée pour autoriser le montage des butées (40, 40') les unes après les autres.

11. Système (34) selon la revendication 10, dans lequel le bol (36) comprend deux nervures annulaires, respectivement supérieure (60) et inférieure (62), qui s'étendent autour dudit axe (A) et qui définissent entre elles ledit au moins un logement (64) d'engagement desdites butées (40, 40'), ces nervures (60, 62) comportant au moins une encoche axiale (70) configurée pour autoriser le montage des butées (40, 40') les unes après les autres.

12. Système (34) selon la revendication 10 ou 11, dans lequel il comprend en outre au moins un verrou (44) qui est engagé dans une des lumières (76) de la bague (38) et dans ladite au moins une encoche (70), ledit verrou (44) étant fixé à ladite bague (38).

13. Système (34) selon la revendication 12, dans lequel le verrou (44) est fixé par une ou des vis (84) à la bague (38).

14. Système (34) selon la revendication 12 ou 13, dans lequel ledit verrou (44) est situé du côté d'un extrados (12b) de la pale (12) de l'aube (10), et est plus proche d'un bord de fuite (12d) de la pale (12) que de son bord d'attaque (12a).

15. Système (34) selon l'une des revendications 12 à 14, dans lequel, avant le montage du verrou (44), la bague (38) est apte à se déplacer en rotation autour dudit axe (A) dans le bol (36), et après montage du verrou (44), la bague (38) est immobilisée en rotation autour de cet axe (A) par butée circonférentielle du verrou (44) sur des côtés de l'encoche (70).

16. Turbomachine, en particulier d'aéronef, comportant au moins un système (34) selon l'une des revendications précédentes.

17. Procédé de montage d'un système (34) selon l'une des revendications 1 à 15, dans lequel il comprend les étapes de :
a) insertion de la bague (38) dans le bol (36),
b) insertion du pied (14) de l'aube (10) dans la bague (38), jusqu'à mise en appui de la portée inférieure (32a) du bulbe (32) du pied (14) sur la paroi inférieure (74) de la bague (38),
c) engagement des butées (40, 40') dans les lumières (76) de la paroi intermédiaire (72) de la bague (38) et dans ledit au moins un logement (64, 68) du bol (36), et
d) vissage de l'écrou (42) sur la bague (38) et serrage de l'écrou (42) sur le bol (36) de façon à forcer l'appui de la paroi inférieure (74) de la bague (38) sur la portée inférieure (32a) du bulbe (32) du pied (14), l'appui de la portée supérieure (32b) de ce bulbe (32) sur les butées (40, 40'), et l'appui de ces butées (40, 40') sur les surfaces d'appui (60a, 60b, 64a, 68a) complémentaires dudit au moins un logement (64, 68) du bol (36).

18. Procédé selon la revendication 17, le système étant tel que défini à la revendication 15, dans lequel l'étape c) comprend les sous-étapes successives suivantes :
c1) engagement d'une des butées (40, 40') dans une des lumières (76) de la paroi intermédiaire (72) de la bague (38), par déplacement de la butée (40, 40') en translation axiale à travers l'encoche (70) du bol (36),
c2) déplacement en rotation de la bague (38) et de la butée (40, 40') à l'intérieur du bol (36), autour de l'axe (A),
c3) engagement d'une autre des butées (40, 40') dans une des lumières (76) de la paroi intermédiaire (72) de la bague (38), par déplacement de la butée (40, 40') en translation axiale à travers l'encoche (70) du bol (36),
c4) déplacement en rotation de la bague (38) et des butées (40, 40') à l'intérieur du bol (36), autour de l'axe (A),
c5) répétition des étapes c3) et c4) pour les butées (40, 40') restantes,
c6) engagement du verrou (44) dans la dernière lumière (76) libre de la paroi intermédiaire (72) de la bague, par déplacement du verrou (44) en translation axiale à travers l'encoche (70) du bol (36), et
c7) fixation du verrou (44) à la bague (38).

19. Procédé selon la revendication 18, dans lequel la bague (38) (est déplacée d'un pas circonférentiel à chacune des étapes c2) et c4), ce pas circonférentiel étant égal à 360°/k, k étant le nombre de lumières (76) de la paroi intermédiaire (72) de la bague (38).

## Patentansprüche

1. System (34) zum Steuern der Winkelfeststellposition einer Schaufel (10) eines Propellers für ein Turbotriebwerk eines Luftfahrzeugs, umfassend:
- eine Schaufel (10), umfassend ein mit einem Fuß (14) verbundenes Schaufelblatt (12), wobei die Schaufel (10) eine Feststellachse (A) umfasst und ihr Fuß (14) einen Bulbus (32) umfasst, der zwei, jeweils unteren (32a) und oberen (32b), Spannweiten aufweist, die sich um die Achse (A) herum erstrecken, und
- eine Schale (36), die eine ringförmige Wand (36a) umfasst, die sich um die Achse (A) herum erstreckt, wobei diese ringförmige Wand (36a) ein unteres axiales Ende umfasst, das durch eine Bodenwand (36b) geschlossen wird, und ein oberes axiales Ende, das offen und konfiguriert ist, um die Montage des Fußes (14) der Schaufel (10) im Inneren der Schale (36) zu ermöglichen, wobei die Bodenwand (36b) eine Aussparung (52) umfasst, die einen nicht kreisförmigen Querschnitt aufweist und konfiguriert ist, um ein freies Ende (28) mit komplementärer Form des Fußes (14) derart aufzunehmen, dass die Schale (36) um die Achse (A) herum drehfest mit dem Fuß (14) verbunden ist,
wobei das System weiter umfasst:
- einen Stützring (38), der sich um die Achse (A) herum erstreckt und um den Fuß (14) herum und in der Schale (36) montiert ist, wobei dieser Stützring (38) eine untere Wand (74) umfasst, die sich in der Schale (36) befindet und die eine Öffnung (74a) umfasst, die von dem freien Ende (28) des Fußes (14) durchquert wird, wobei die untere Spannweite (32a) des Bulbus (32) des Fußes (14) konfiguriert ist, um von der dem Schaufelblatt (12) der Schaufel (10) gegenüberliegenden Seite mindestens in axialer Richtung gegen diese untere Wand (74) anzuliegen, wobei der Stützring (38) weiter eine durchbrochene mittlere Wand (72) und ein Gewinde (78) an einem oberen Ende umfasst,
- Anschläge (40, 40'), die um die Achse (A) herum angeordnet sind und die um den Fuß (14) herum und in der Schale (36) montiert sind, wobei diese Anschläge (40, 40') in den Lumen (76) der mittleren Wand (72) und in mindestens einer Aufnahme (64, 68) der ringförmigen Wand (36a) der Schale (36) in Eingriff stehen, wobei die obere Spannweite (32b) des Bulbus (32) des Fußes (14) konfiguriert ist, um von der Seite des Schaufelblatts (12) der Schaufel (10) mindestens in axialer Richtung gegen diese Anschläge (40, 40') anzuliegen, und
- eine Schraubenmutter (42), die in dem Gewinde (78) des Stützrings (38) verschraubt und konfiguriert ist, um derart axial an der Schale (36) anzuliegen, dass das Festziehen der Schraubenmutter (42) die Anlage der unteren Wand (74) des Stützrings (38) an der unteren Spannweite (32a) des Bulbus (32) des Fußes (14), die Anlage der oberen Spannweite (32b) dieses Bulbus (32) an den Anschlägen (40, 40') und die Anlage dieser Anschläge (40, 40') an komplementären Anlageoberflächen (60a, 60b, 64a, 68a) der mindestens einen Aufnahme (64, 68) der Schale (36) erzwingt.

2. System (34) nach Anspruch 1, wobei die Anzahl der Anschläge (40, 40') kleiner als oder gleich der Anzahl an Lumen (76) der mittleren Wand (72) dieses Stützrings (38) ist, wobei jeder der Anschläge (40, 40') in einem dieser Lumen (76) in Eingriff steht.

3. System (34) nach Anspruch 2, wobei die Anzahl der Anschläge (40, 40') zwischen 5 und 20 liegt.

4. System (34) nach einem der vorstehenden Ansprüche, wobei die untere Wand (74) des Stützrings (38) eine von der Seite des Schaufelblatts (14) derart aufgeweitete allgemeine Kegelstumpfform aufweist, dass die Anlage der unteren Spannweite (32a) des Bulbus (32) des Fußes (14) an dieser unteren Wand (74) in Bezug auf die Achse (A) an jedem Punkt eine axiale Komponente und eine radiale Komponente aufweist.

5. System (34) nach einem der vorstehenden Ansprüche, wobei jeder der Anschläge (40, 40') eine Anlagefläche (40a) an der oberen Spannweite (32b) des Bulbus (32) des Fußes (14) umfasst, wobei diese Anlagefläche (40a) derart angepasst ist, dass die Anlage in Bezug auf die Achse (A) an jedem Punkt eine axiale Komponente und eine radiale Komponente aufweist.

6. System (34) nach einem der vorstehenden Ansprüche, wobei die Schraubenmutter (42) an der Außenseite des Stützrings (38) verschraubt ist und/oder axial an einem oberen freien Ende (36c) der Schale (36) anliegt.

7. System (34) nach einem der vorstehenden Ansprüche, wobei jeder der Anschläge (40, 40') mindestens einen in Bezug auf die Achse (A) radial in Richtung der Außenseite hervorstehenden Finger (86, 88) umfasst, wobei der mindestens eine Finger (86, 88) eine obere Fläche (86a) zur axialen Anlage an einer Anlageoberfläche (60b) umfasst, die der mindestens einen Aufnahme (64) entspricht.

8. System (34) nach dem vorstehenden Anspruch, wobei der mindestens eine Finger (86, 88) weiter eine seitliche Fläche (86b) zur radialen Anlage in Richtung der Außenseite an einer Anlageoberfläche (64a) umfasst, die der mindestens einen Aufnahme (64) entspricht.

9. System (34) nach Anspruch 7 oder 8, wobei jeder der Anschläge (40, 40') zwei in Bezug auf die Achse (A) radial in Richtung der Außenseite hervorstehende und axial hintereinander angeordnete Finger (86, 88) umfasst.

10. System (34) nach einem der vorstehenden Ansprüche, wobei die Schale (36) mindestens eine ringförmige Rippe (60, 62) umfasst, die sich um die Achse (A) herum erstreckt und die die mindestens eine Aufnahme (64, 68) zum Eingriff der Anschläge (40, 40') definiert, wobei diese Rippe (60, 62) mindestens eine axiale Einkerbung (70) umfasst, die konfiguriert ist, um die Montage der Anschläge (40, 40') einen nach dem anderen zu ermöglichen.

11. System (34) nach Anspruch 10, wobei die Schale (36) zwei ringförmige, jeweils obere (60) und untere (62), Rippen umfasst, die sich um die Achse (A) herum erstrecken und die zwischen ihnen die mindestens eine Aufnahme (64) zum Eingriff der Anschläge (40, 40') definieren, wobei diese Rippen (60, 62) mindestens eine axiale Einkerbung (70) umfassen, die konfiguriert ist, um die Montage der Anschläge (40, 40') einen nach dem anderen zu ermöglichen.

12. System (34) nach Anspruch 10 oder 11, wobei es weiter mindestens eine Verriegelung (44) umfasst, die in einem der Lumen (76) des Stützrings (38) in Eingriff steht, und in der mindestens einen Einkerbung (70) die Verriegelung (44) an dem Stützring (38) befestigt ist.

13. System (34) nach Anspruch 12, wobei die Verriegelung (44) durch eine oder mehrere Schrauben (84) an dem Stützring (38) befestigt ist.

14. System (34) nach Anspruch 12 oder 13, wobei sich die Verriegelung (44) auf der Seite einer Oberseite (12b) des Schaufelblatts (12) der Schaufel (10) befindet und näher an einer Abströmkante (12d) des Schaufelblatts (12) als an seiner Anströmkante (12a) vorliegt.

15. System (34) nach einem der Ansprüche 12 bis 14, wobei vor der Montage der Verriegelung (44) der Stützring (38) in der Lage ist, sich in der Schale (36) drehend um die Achse (A) herum zu verschieben, und nach der Montage der Verriegelung (44) der Stützring (38) um diese Achse (A) herum durch umlaufenden Anschlag der Verriegelung (44) auf den Seiten der Einkerbung (70) drehend immobilisiert ist.

16. Turbotriebwerk, insbesondere eines Luftfahrzeugs, das mindestens ein System (34) nach einem der vorstehenden Ansprüche umfasst.

17. Verfahren zum Montieren eines Systems (34) nach einem der Ansprüche 1 bis 15, wobei es die Schritte umfasst zum:
a) Einsetzen des Stützrings (38) in die Schale (36),
b) Einsetzen des Fußes (14) der Schaufel (10) in den Stützring (38), bis zum Anlegen der unteren Spannweite (32a) des Bulbus (32) des Fußes (14) an der unteren Wand (74) des Stützrings (38),
c) Einführen der Anschläge (40, 40') in die Lumen (76) der mittleren Wand (72) des Stützrings (38) und in die mindestens eine Aufnahme (64, 68) der Schale (36), und
d) Verschraubung der Schraubenmutter (42) an dem Stützring (38) und Festziehen der Schraubenmutter (42) an der Schale (36) auf eine Weise, um die Anlage der unteren Wand (74) des Stützrings (38) an der unteren Spannweite (32a) des Bulbus (32) des Fußes (14), die Anlage der oberen Spannweite (32b) dieses Bulbus (32) an den Anschlägen (40, 40') und die Anlage dieser Anschläge (40, 40') an den komplementären Anlageoberflächen (60a, 60b, 64a, 68a) der mindestens einen Aufnahme (64, 68) der Schale (36) zu erzwingen.

18. Verfahren nach Anspruch 17, wobei das System wie in Anspruch 15 definiert ist, wobei der Schritt c) die folgenden aufeinander folgenden Teilschritte umfasst:
c1) Einführen eines der Anschläge (40, 40') in eins der Lumen (76) der mittleren Wand (72) des Stützrings (38) durch axiale translatorische Verschiebung des Anschlags (40, 40') quer durch die Einkerbung (70) der Schale (36),
c2) drehende Verschiebung des Stützrings (38) und des Anschlags (40, 40') im Inneren der Schale (36) um die Achse (A) herum,
c3) Einführen des anderen der Anschläge (40, 40') in eins der Lumen (76) der mittleren Wand (72) des Stützrings (38) durch axiale translatorische Verschiebung des Anschlags (40, 40') quer durch die Einkerbung (70) der Schale (36),
c4) drehende Verschiebung des Stützrings (38) und der Anschläge (40, 40') im Inneren der Schale (36) um die Achse (A) herum,
c5) Wiederholung der Schritte c3) und c4) für die verbleibenden Anschläge (40, 40'),
c6) Einführen der Verriegelung (44) in das letzte frei Lumen (76) der mittleren Wand (72) des Stützrings durch axiale translatorische Verschiebung der Verriegelung (44) quer durch die Einkerbung (70) der Schale (36),
c7) Befestigung der Verriegelung (44) an dem Stützring (38).

19. Verfahren nach Anspruch 18, wobei der Stützring (38) bei jedem der Schritte c2) und c4) um einen umlaufenden Schritt verschoben wird, wobei dieser umlaufende Schritt gleich 360°/k ist, wobei k die Anzahl von Lumen (76) der mittleren Wand (72) des Stützrings (38) ist.

## Claims

1. A system (34) for controlling the pitch setting of a propeller vane (10) for an aircraft turbine engine, comprising:
- a vane (10) comprising a blade (12) connected to a root (14), the vane (10) comprising a pitch axis (A) and its root (14) comprising a bulb (32) which has two bearing surfaces, a lower bearing surface (32a) and an upper bearing surface (32b) respectively, which extend around said axis (A), and
- a hub (36) comprising an annular wall (36a) extending about said axis (A), this annular wall (36a) comprising a lower axial end closed by a bottom wall (36b), and an upper axial end open and configured to allow the root (14) of the vane (10) to be mounted inside the hub (36), the bottom wall (36b) comprising a recess (52) having a non-circular cross-section and configured to receive a free end (28) of complementary shape to said root (14) so that the hub (36) is secured in rotation to the root (14) about said axis (A),
the system further comprising:
- a ring (38) which extends around said axis (A) and which is mounted around the root (14) and in the hub (36), this ring (38) comprising a lower wall (74) which is located in the hub (36) and which comprises an aperture (74a) through which said free end (28) of the root (14) passes, said lower bearing surface (32a) of the bulb (32) of the root (14) being configured so as to bear at least in the axial direction on this lower wall (74), on the side opposite the blade (12) of the vane (10), the ring (38) further comprising a perforated intermediate wall (72) and a thread (78) at an upper end,
- abutments (40, 40') which are arranged around said axis (A) and which are mounted around the root (14) and in the hub (36), these abutments (40, 40') being engaged in openings (76) in said intermediate wall (72) and in at least one housing (64, 68) of the annular wall (36a) of the hub (36), said upper bearing surface (32b) of the bulb (32) of the root (14) being configured to bear at least in the axial direction on these abutments (40, 40'), on the same side as the blade (12) of the vane (10), and
- a nut (42) screwed onto the thread (78) of the ring (38) and configured to bear axially on said hub (36) so that the tightening of the nut (42) forces the lower wall (74) of the ring (38) to bear on the lower bearing surface (32a) of the bulb (32) of the root (14), the upper bearing surface (32b) of this bulb (32) to bear on the abutments (40, 40'), and these abutments (40, 40') to bear on complementary support surfaces (60a, 60b, 64a, 68a) of said at least one housing (64, 68) of the hub (36).

2. The system (34) according to claim 1, wherein the number of abutments (40, 40') is less than or equal to the number of openings (76) in the intermediate wall (72) of the ring (38), each of the abutments (40, 40') being engaged in one of these openings (76).

3. The system (34) according to claim 2, wherein the number of abutments (40, 40') is between 5 and 20.

4. The system (34) according to one of the preceding claims, wherein the lower wall (74) of the ring (38) has a generally frustoconical shape flared towards the blade (14) so that the bearing of the lower bearing surface (32a) of the bulb (32) of the root (14) on this lower wall (74) has at every point an axial component and a radial component with respect to said axis (A).

5. The system (34) according to one of the preceding claims, wherein each of the abutments (40, 40') comprises a bearing face (40a) on the upper bearing surface (32b) of the bulb (32) of the root (14), this bearing face (40a) being shaped so that the bearing has at any point an axial component and a radial component with respect to said axis (A).

6. The system (34) according to one of the preceding claims, wherein the nut (42) is screwed to the outside of the ring (38) and/or bears axially on an upper free end (36c) of the hub (36).

7. The system (34) according to one of the preceding claims, wherein each of the abutments (40, 40') comprises at least one finger (86, 88) projecting radially outwards with respect to said axis (A), said at least one finger (86, 88) comprising an upper face (86a) bearing axially on a corresponding support surface (60b) of said at least one housing (64).

8. The system (34) according to the preceding claim, wherein said at least one finger (86, 88) further comprises a lateral face (86b) bearing radially outwards on a corresponding support surface (64a) of said at least one housing (64).

9. The system (34) according to claim 7 or 8, wherein each of the abutments (40, 40') comprises two fingers (86, 88) projecting radially outwards with respect to said axis (A) and arranged axially one behind the other.

10. The system (34) according to one of the preceding claims, wherein the hub (36) comprises at least one annular rib (60, 62) which extends around said axis (A) and which defines said at least one housing (64, 68) for engaging said abutments (40, 40'), this rib (60, 62) comprising at least one axial notch (70) configured to allow the abutments (40, 40') to be mounted one after the other.

11. The system (34) according to claim 10, wherein the hub (36) comprises two annular ribs, respectively upper (60) and lower (62), which extend around said axis (A) and which define between them said at least one housing (64) for engaging said abutments (40, 40'), these ribs (60, 62) comprising at least one axial notch (70) configured to allow the abutments (40, 40') to be mounted one after the other.

12. The system (34) according to claim 10 or 11, wherein it further comprises at least one bolt (44) which is engaged in one of the openings (76) of the ring (38) and in said at least one notch (70), said bolt (44) being attached to said ring (38).

13. The system (34) as claimed in claim 12, wherein the bolt (44) is attached by one or more screws (84) to the ring (38).

14. The system (34) according to claim 12 or 13, wherein said bolt (44) is located on the side of a suction side (12b) of the blade (12) of the vane (10), and is closer to a trailing edge (12d) of the blade (12) than to its leading edge (12a).

15. The system (34) according to one of claims 12 to 14, wherein, before mounting the bolt (44), the ring (38) is able to move in rotation about said axis (A) in the hub (36), and after mounting the bolt (44), the ring (38) is prevented from rotating about this axis (A) by circumferential abutment of the bolt (44) on sides of the notch (70).

16. A turbine engine, in particular for an aircraft, comprising at least one system (34) according to one of the preceding claims.

17. A method for mounting a system (34) according to one of claims 1 to 15, wherein it comprises the steps of:
a) inserting the ring (38) into the hub (36),
b) inserting the root (14) of the vane (10) into the ring (38) until the lower bearing surface (32a) of the bulb (32) of the root (14) bears on the lower wall (74) of the ring (38),
c) engaging the abutments (40, 40') in the openings (76) in the intermediate wall (72) of the ring (38) and in said at least one housing (64, 68) of the hub (36), and
d) screwing the nut (42) onto the ring (38) and tightening the nut (42) on the hub (36) so as to force the lower wall (74) of the ring (38) to bear on the lower bearing surface (32a) of the bulb (32) of the root (14), the upper bearing surface (32b) of this bulb (32) to bear on the abutments (40, 40'), and these abutments (40, 40') to bear on the complementary support surfaces (60a, 60b, 64a, 68a) of said at least one housing (64, 68) of the hub (36).

18. The method as claimed in claim 17, the system being as defined in claim 15, wherein step c) comprises the following successive sub-steps:
c1) engaging one of the abutments (40, 40') in one of the openings (76) in the intermediate wall (72) of the ring (38), by moving the abutment (40, 40') in axial translation through the notch (70) in the hub (36),
c2) moving in rotation the ring (38) and the abutment (40, 40') inside the hub (36), about the axis (A),
c3) engaging another of the abutments (40, 40') in one of the openings (76) in the intermediate wall (72) of the ring (38), by moving the abutment (40, 40') in axial translation through the notch (70) in the hub (36),
c4) moving in rotation the ring (38) and the abutments (40, 40') inside the hub (36), about the axis (A),
c5) repeating steps c3) and c4) for the remaining abutments (40, 40'),
c6) engaging the bolt (44) in the last free opening (76) in the intermediate wall (72) of the ring, by moving the bolt (44) in axial translation through the notch (70) in the hub (36), and
c7) attaching the bolt (44) to the ring (38).

19. The method according to claim 18, wherein the ring (38) is moved by one circumferential pitch in each of steps c2) and c4), this circumferential pitch being equal to 360°/k, k being the number of openings (76) in the intermediate wall (72) of the ring (38).
